# EUROPEAN PATENT APPLICATION

(11) **EP 4 644 190 A1**
(43) Date of publication of application: **05.11.2025**
(21) Application number: 23911637.9
(22) Date of filing: 08.12.2023
(51) Int. Cl.: B60R 21/36

(54) **PEDESTRIAN PROTECTION AIRBAG DEVICE**

(30) Priority: 26.12.2022 JP 2022208348
(71) Applicant: Autoliv Development AB, 44783 Vargarda (SE)
(72) Inventor: HIRAOKA, Jun, Yokohama-shi, Kanagawa 222-8580 (JP); ITO, Satoshi, Yokohama-shi, Kanagawa 222-8580 (JP); TAMURA, Atsushi, Yokohama-shi, Kanagawa 222-8580 (JP)
(74) Representative: Müller Verweyen
(86) International application number: PCT/JP2023/044044
(87) International publication number: WO 2024/142856

(57) **Abstract**

To provide a structure which suppresses strong interference of an airbag cushion with a windshield or peripheral parts and deploys the airbag in time for the required deployment time of the forwardmost impact point of a vehicle. To achieve this, the present disclosure provides a pedestrian protection airbag device (1) including an airbag cushion 10 that expands during a vehicle collision and deploys from a boundary part 106 between a hood 102 and a windshield 104 of the vehicle to protect pedestrians and the like. The pedestrian protection airbag device (1) includes:
a temporary fastening part (14) that temporarily fastens a part of the airbag cushion (10) so as to divide a chamber (11) that forms an internal space of the airbag cushion (10) into a front expansion part (12) that deploys on an upper part of a hood (102) in the initial stage of expansion and deployment of the airbag cushion (10), and a rear expansion part (13) that deploys near a lower end part (104b) of a windshield (104); and
an inflator (20) that discharges gas toward the front expansion part (12) so as to deploy the front expansion part (12) earlier than the rear expansion part (13).

## Description

### TECHNICAL FIELD

The present invention relates to a pedestrian protection airbag device.

### BACKGROUND ART

Pedestrian protection airbag devices are used to protect the head of a pedestrian who rides up over the hood (bonnet panel) when the pedestrian collides with a vehicle and the airbag cushion is deployed in the area of the rear end part of the hood. An example of this manner of pedestrian protection airbag device is one that deploys a pedestrian airbag cushion mounted at the boundary part between the hood and the windshield (front glass) to cover both the A-pillars and the windshield, which are located rearward of the boundary, and the rear end part of the hood, which is located forward of the boundary (see, for example, Patent Document 1).

### RELATED ART DOCUMENTS

### PATENT DOCUMENTS

Patent Document 1 Patent No. 6592987

### SUMMARY OF THE INVENTION

### PROBLEM TO BE SOLVED BY THE INVENTION

However, with the pedestrian protection airbag device described above, when the airbag cushion is expanded with gas generated by igniting the inflator, if the gas flows into the cushion chamber on the rear side of the vehicle (closer to the windshield) first (gas flows into the area or portion of the internal area of the airbag cushion closer to the windshield), the following two problems can arise.

First, when the airbag cushion expands in the narrow area directly above the windshield, causing high internal pressure, the airbag cushion may interfere strongly with surrounding components such as the windshield and wipers, which may result in damage to the windshield.

Secondly, when a pedestrian collides with a vehicle, the further forward the impact point is on the vehicle, the earlier the pedestrian's head will strike the vehicle. Therefore, the speed at which the airbag protects the impact point at the very front of the vehicle within the area that the airbag must protect is particularly important, but there is a problem that the airbag may not deploy in time. In particular, in recent years, the areas to be protected have been expanding year by year, and contact times have been moving earlier in line with exterior design trends, so there is a growing tendency for expansion to be unable to meet time requirements with the existing structure as-is.

Therefore, the present invention aims to provide a pedestrian protection airbag device with a structure that is designed to suppress the airbag cushion from interfering strongly with the windshield (front glass) and surrounding parts during the initial stage of expansion and deployment of the airbag cushion, and to deploy within the required deployment time at the forward-most impact point of the vehicle.

### MEANS FOR SOLVING THE PROBLEM

A first aspect of the present invention is a pedestrian protection airbag device including:
a pedestrian protection airbag device including an airbag cushion that expands during a vehicle collision and deploys from a boundary part between a hood and a windshield of the vehicle to protect a pedestrian or the like who collides with the vehicle;
a temporary fastening part that temporarily fastens a part of the airbag cushion so as to divide a chamber that forms an internal space of the airbag cushion into a front expansion part that expands at an upper part of the hood in an initial stage of expansion and deployment of the airbag cushion and a rear expansion part that expands near a lower end part of the windshield; and
an inflator that discharges gas toward the front expansion part so as to expand the front expansion part earlier than the rear expansion part.

In a pedestrian protection airbag device configured as described above, the chamber of the airbag cushion is divided into a front expansion part and a rear expansion part by a temporary fastening part, and the inflator discharges gas toward the front expansion part so as to deploy the front expansion part earlier than the rear expansion part, enabling the front expansion part to deploy first, relatively quickly. This delays the deployment of the rear expansion part, thereby suppressing the internal pressure of the airbag cushion from becoming too high in the narrow area directly above the windshield. As a result, the airbag cushion does not strongly interfere with surrounding parts such as the windshield and wipers, and damage to the windshield is prevented. In addition, by inflating the front expansion part earlier than the rear expansion part, even if the impact point is on the front side of the vehicle, complete deployment can be achieved before the time when the pedestrian's head collides with the vehicle.

In the pedestrian protection airbag device described above, the temporary fastening part may be formed by a temporary stitched part where a part of the airbag cushion is sewn.

In the pedestrian protection airbag device described above, the temporary stitched part may be provided between the front expansion part and the rear expansion part.

In the pedestrian protection airbag device described above, the temporary stitched part may be provided by folding a part of the airbag cushion inward and sewing the folded portion.

In the pedestrian protection airbag device described above, the temporary stitched part may be provided by folding a part of the airbag cushion outward and sewing the folded portion.

In the pedestrian protection airbag device described above, the temporary stitched part may be provided using a sewing thread that may break during the course of the airbag cushion being expanded and deployed.

In the pedestrian protection airbag device described above, the temporary stitched part may be provided along the vehicle width direction.

In the pedestrian protection airbag device described above, the temporary stitched part may be provided over the entire length of the airbag cushion in the vehicle width direction.

In the pedestrian protection airbag device described above, the temporary stitched part may be provided in a vehicle width direction, except for on lower portions of the A-pillars on both sides.

In the pedestrian protection airbag device described above, the inflator may be installed so as to discharge gas toward the front of the vehicle.

In the pedestrian protection airbag device described above, the inflator may be installed so as to discharge gas in the direction in which the front expansion part deploys.

In the pedestrian protection airbag device described above, the inflator may be installed so as to discharge gas in an obliquely upward direction of the vehicle.

In the pedestrian protection airbag device described above, at least two inflators may be provided.

### Effect of Invention

According to the present invention, a structure can be provided that prevents the airbag cushion from interfering strongly with the windshield (front glass) and surrounding parts during the initial stage of expansion and deployment of the airbag cushion, and that enables the airbag cushion to deploy within the required deployment time at the impact point at the forward-most impact point of the vehicle.

### BRIEF DESCRIPTION OF THE DRAWINGS

FIG. 1 is a schematic plan view of the front part of a vehicle, depicting a state in which an airbag cushion of a pedestrian protection airbag device is deployed.
FIG. 2 is a diagram depicting a schematic of the pedestrian protection airbag device installed in a vehicle.
FIG. 3 is a diagram depicting a schematic of the pedestrian protection airbag device in an initial stage of expansion and deployment of an airbag cushion.
FIG. 4 is a diagram depicting a schematic of the pedestrian protection airbag device at a stage when the airbag cushion is further expanded and deployed.
FIG. 5 is a diagram depicting a schematic of the pedestrian protection airbag device at a stage when the airbag cushion is fully expanded and deployed.
FIG. 6 is a diagram depicting a schematic of the airbag cushion in (A) a state before folding, (B) a state during folding, and (C) a state after folding.
FIG. 7 is an image depicting the airbag cushion after folding.
FIG. 8 is an image depicting the vicinity of the opening part of the airbag cushion.
FIG. 9 is an image depicting the vicinity of a temporary stitched part inside an airbag cushion.
FIG. 10 is a diagram depicting a state in which an inflator is attached inside an airbag cushion.
FIG. 11 is a top view schematically depicting the expanded and deployed airbag cushion.
FIG. 12 is a diagram depicting a schematic of a pedestrian protection airbag device according to another embodiment of the present invention.
FIG. 13 is a diagram depicting a schematic of the pedestrian protection airbag device where the airbag cushion is in an initial stage of expansion and deployment.
FIG. 14 is a diagram depicting a schematic of the pedestrian protection airbag device at a stage when the airbag cushion has further expanded and deployed.
FIG. 15 is a diagram depicting a schematic of the pedestrian protection airbag device at a stage when the airbag cushion is fully expanded and deployed.
FIG. 16 is a diagram depicting a state in which a head of the pedestrian is protected by the airbag cushion that has been expanded and deployed during a vehicle collision.

### DESCRIPTION OF THE PREFERRED EMBODIMENTS

### Definition of Terms and Overview of Embodiments

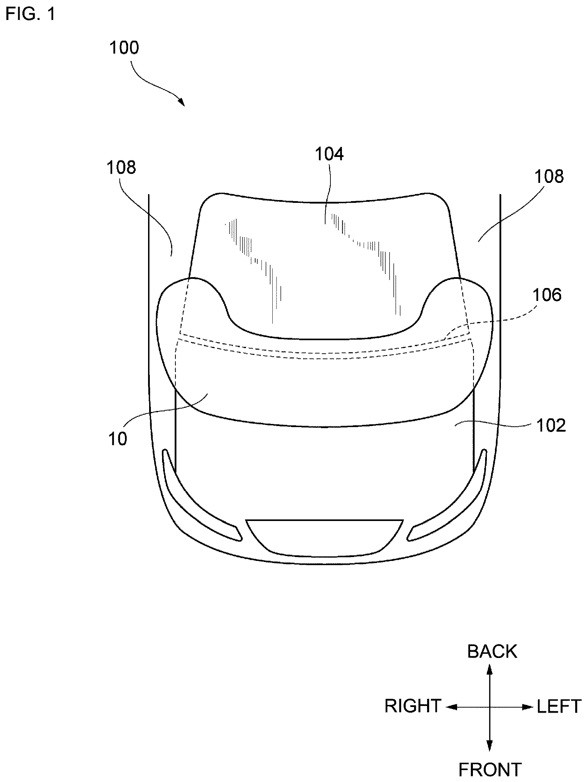

The pedestrian protection airbag device 1 according to the preferred embodiments of the present invention will be described with reference to the accompanying drawings. In the present document, up and down, left and right, and front and rear are defined as follows. When a passenger is seated in a vehicle seat in a regular posture, the direction in which the passenger faces is referred to as front, and the opposite direction is referred to as the rear, and a direction indicating a coordinate axis is referred to as the front-rear direction or vehicle front-rear direction. Furthermore, when the passenger is seated in the seat in a regular posture, the right side of the passenger is referred to as the right direction, the left side of the passenger is referred to as the left direction, and a direction indicating a coordinate axis is referred to as the left-right direction or vehicle width direction (see FIG. 1). Similarly, when the passenger is seated in a regular posture, a head direction of the passenger is referred to as up, a waist direction of the passenger is referred to as down, and a direction indicating a coordinate axis is referred to as an up-down direction.

The object of protection by the pedestrian protection airbag device 1 according to the embodiment is primarily a pedestrian, and the following description will be provided with a pedestrian as an example. However, the object is not limited to this, and the protected persons also include, for example, people riding bicycles (cyclists), as well as people riding motorbikes, skateboards, kick scooters, and the like.

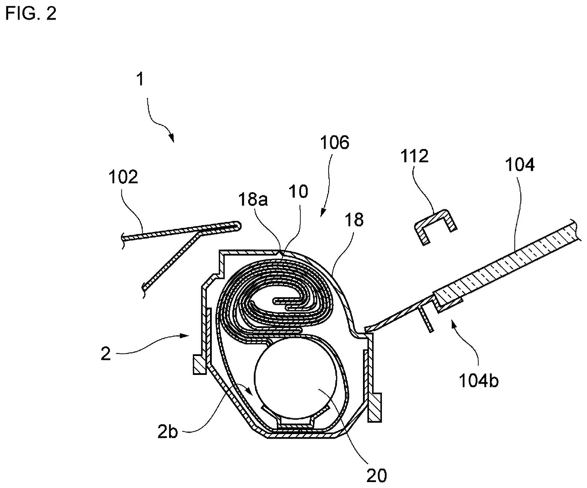

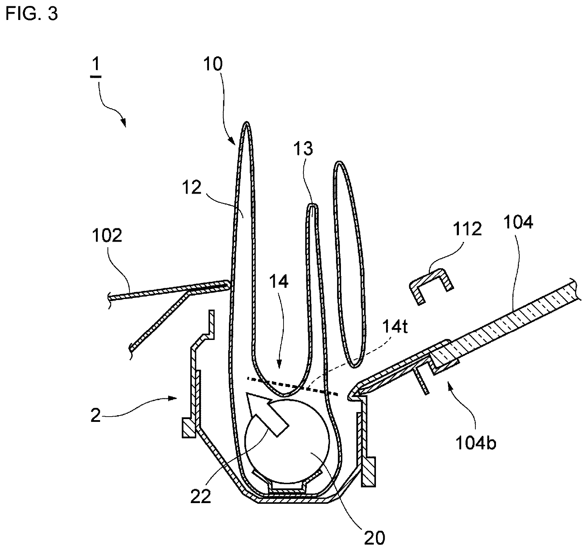

The pedestrian protection airbag device 1 according to the present Embodiment includes an airbag cushion 10 that expands and deploys outside the vehicle cabin upon collision of a vehicle 100, and an inflator 20 that is actuated when a vehicle collision occurs to supply gas for expanding and deploying the airbag cushion 10 with gas 22 (the flow of the gas is depicted diagrammatically using arrows and the symbol 22 in FIG. 3 and other drawings) (see FIG. 2 and other drawings).

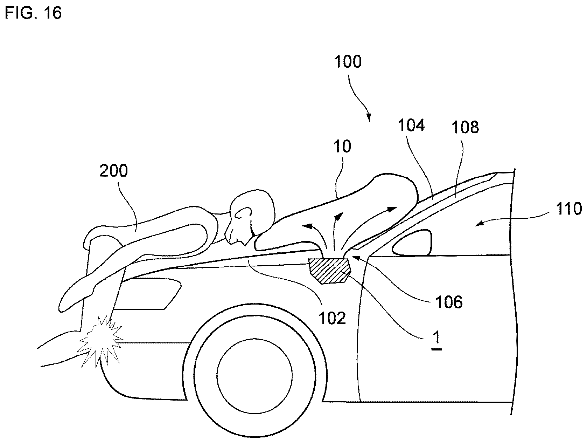

The term "vehicle collision" mainly refers to a situation where the vehicle 100 collides with a pedestrian (indicated by reference numeral 200 in FIG. 16) (see FIG. 16). Determination of whether or not the vehicle 100 has collided, and whether or not the collision is with a pedestrian, can be based on known methods, for example, detection by a sensor (a pressure sensor or an acceleration sensor) mounted on the bumper of the vehicle.

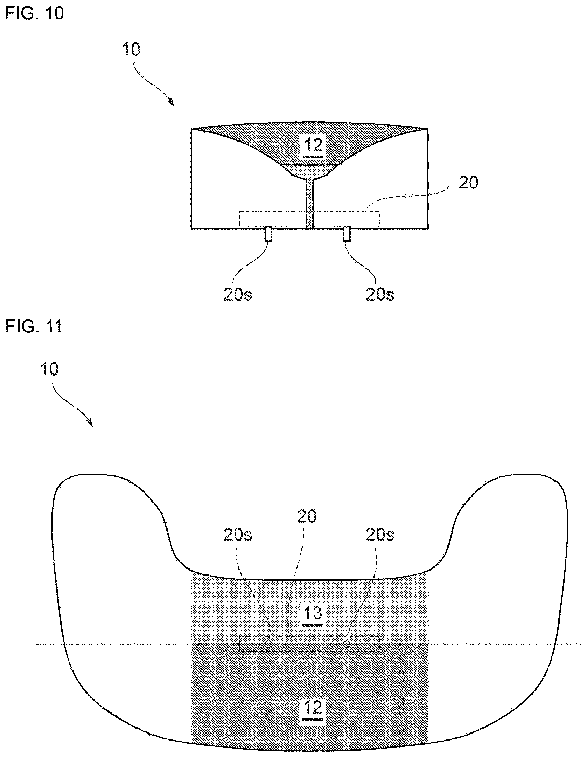

"Outside the vehicle cabin" means outside of the vehicle cabin 110 of the vehicle 100 (see FIG. 16). For example, the pedestrian protection airbag device 1 is mounted near a boundary part 106 between a hood 102 and a windshield 104 of a vehicle 100, and the airbag cushion 10 expands and deploys from near the boundary part 106 toward the outside of the vehicle. The airbag cushion 10 thus expanded and deployed covers the rear side of the hood 102, the lower front end part of the windshield 104, and at least the lower part of the left and right A-pillars 108, thereby protecting the head of a pedestrian who collides with the vehicle 100 (see FIG. 11 and FIG. 16). The coverage area of the airbag cushion 10 on the A-pillar 108 may be extended to reach the upper part of the A-pillars 108 if necessary.

In the following, an example will be described in which the airbag cushion 10 expands and deploys from the vicinity of the boundary part 106 between the hood 102 and the windshield 104 (see FIG. 1 and FIG. 16). In addition, the "hood" is sometimes called a "bonnet". Also, a "windshield" may be called a "front glass".

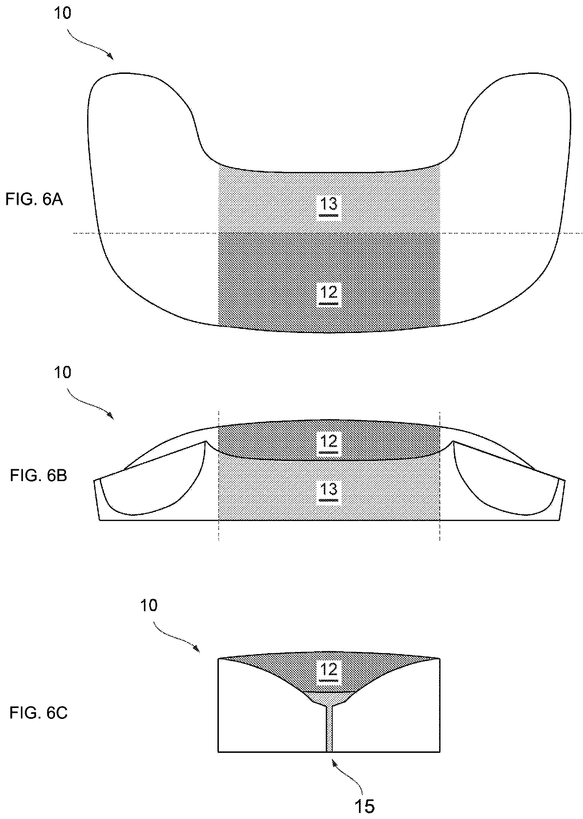

The airbag cushion 10 is normally folded and stowed within a housing 2 (see FIG. 2 and FIG. 6). The folded airbag cushion 10 has, for example, a roll shape, an accordion shape, or a combination thereof. The airbag cushion 10 is expanded and deployed upon receipt of gas 22 from the inflator 20 in the event of a vehicle collision (see FIG. 11, and the like).

The housing 2 is, for example, a shallow metal case that is open at the top and extends in the vehicle width direction. The opening of the housing 2 is covered by a cover 18, and the cover 18 is formed with a breakable part 18a, which may be, for example, a perforation, a slit, a groove part, or the like (see FIG. 2). The breakable part 18a is configured to be torn by the expanded and deployed airbag cushion 12, thereby facilitating the airbag cushion 10 to pop upward from the cover 18.

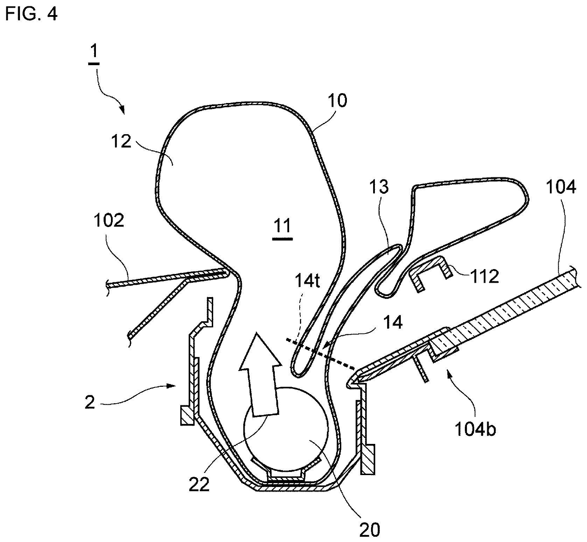

The airbag cushion 10 is provided with a temporary stitched part (temporary fastening part) 14. The temporary stitched part 14 temporarily fastens a part of the airbag cushion 10 so as to divide the area or partitioned space (referred to as a chamber in this specification and indicated by the symbol 11) that forms the internal space of the airbag cushion 10 into a front expansion part 12 and a rear expansion part 13, at least in the initial stages of expansion and deployment of the airbag cushion 10. Here, the front expansion part 12 and the rear expansion part 13 respectively refer to the front and rear portions of the chamber 11 of the airbag cushion 10 that expands and deploys. In fact, the front expansion part 12 is a portion that is deployed mainly at the upper part of the hood 102, and the rear expansion part 13 is a portion that is deployed mainly near a lower end part 104b of the windshield 104 (see FIG. 3, FIG. 4, and the like).

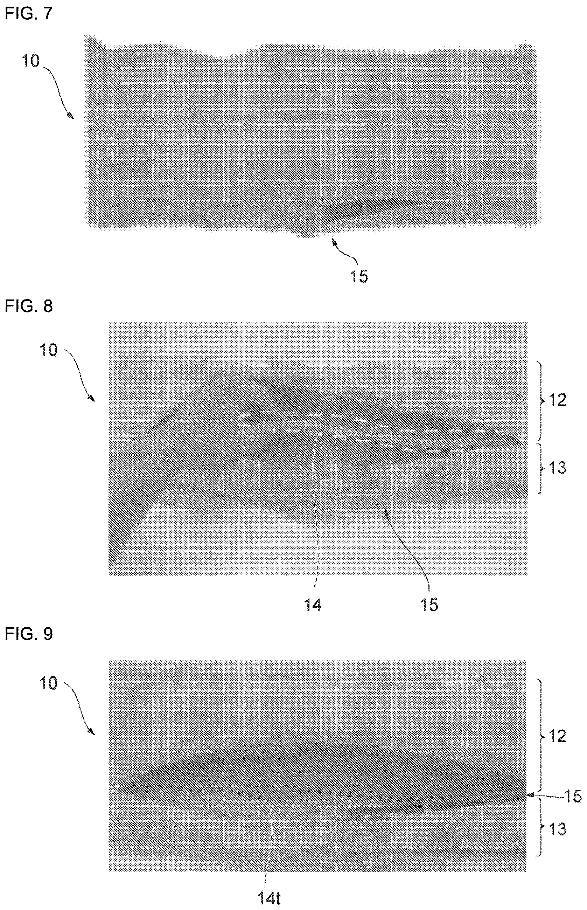

The temporary stitched part 14 is formed by sewing a part of the airbag cushion 10 with sewing thread 14t (see FIG. 3, FIG. 9, and the like). The temporary stitched part 14 is preferably configured between the front expansion part (a portion constituting the front expansion part) 12 and the rear expansion part (a portion constituting the rear expansion part) 13, and by leaving a portion of the airbag cushion 10 in a temporarily fastened state, so to speak, the flow of gas 22 is restricted in the initial stage of deployment so that the airbag cushion 10 does not expand and deploy uniformly as in the conventional case, but the front expansion part 12 expands and deploys first, and a state is created in which the front expansion part 12 more readily expands and deploys first. As long as the sewing thread 14t performs this function, the sewing thread 14t does not need to remain intact until the end, and it does not matter if the sewing thread 14t breaks while the airbag cushion 10 is expanding and deploying.

The inflator 20 is installed on a bottom wall part 2b of the housing 2 so as to discharge gas 22 toward the front expansion part 12 in the event of a vehicle collision (see FIG. 2, FIG. 3, and the like). The inflator 20 of the present Embodiment discharges gas 22 forward of the temporary stitched part 14, thereby causing the front expansion part 12 to expand earlier than the rear expansion part 13 (see FIG. 3, and the like). As long as the front expansion part 12 is thus deployed more quickly, the direction in which the gas 22 is discharged by the inflator 20 is not particularly limited. In addition to discharging the gas 22 in the direction in which the front expansion part 12 deploys as described above, the gas 22 may be discharged, for example, toward the front of the vehicle 100, or the gas 22 may be discharged diagonally upward from the vehicle 100.

In the following, a more specific embodiment of the temporary stitched part 14 that is provided so as to cause the front expansion part 12 to expand and deploy first as described above will be described by way of example.

### Embodiment 1

In the pedestrian protection airbag device 1 of the present Embodiment, first, the airbag cushion 10 is folded in the order of (A), (B), and (C) in FIG. 6 (see FIG. 6). With this airbag cushion 10, an opening part 15 into which the inflator 20 is inserted is not closed (see FIG. 6C), and the opening part 15 remains open even after folding as described above.

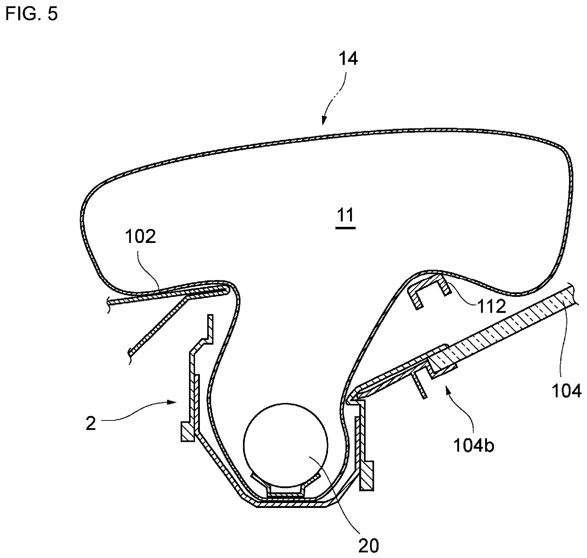

Next, a part of the airbag cushion 10 is temporarily stitched (see FIG. 7 to FIG. 9). By providing the temporary stitched part 14 inside the airbag cushion 10, the gas flow is streamlined at the initial stage of deployment, allowing the front expansion part 12 to expand and deploy more quickly (see FIG. 2 to FIG. 5). The temporary stitched part 14 is formed by folding a part of the airbag cushion 10 (preferably the portion between the front expansion part 12 and the rear expansion part 13) inward and sewing the folded portion with sewing thread 14t (see FIG. 3, and the like). To avoid any difficulty in distinguishing therebetween, the dark grey parts in FIG. 6 represent (portions constituting) the front expansion part 12, and the light grey parts represent (portions constituting) the rear expansion part 13.

After temporary stitching, the inflator 20 is inserted through the opening part 15, and the flap (not depicted) connected to the front expansion part 12 is pulled to the lower part of the rear expansion part 13 while holding the tip portion of the flap so as to cover the opening part 15 and wrap the flap around the inflator 20. Then, an engaging hole (not depicted) provided at the tip portion of the flap is engaged onto a stud bolt 20s protruding from the side of the inflator 20, and the stud bolt 20s is passed through the engaging hole to close the opening part 15 (see FIG. 10).

### Embodiment 2

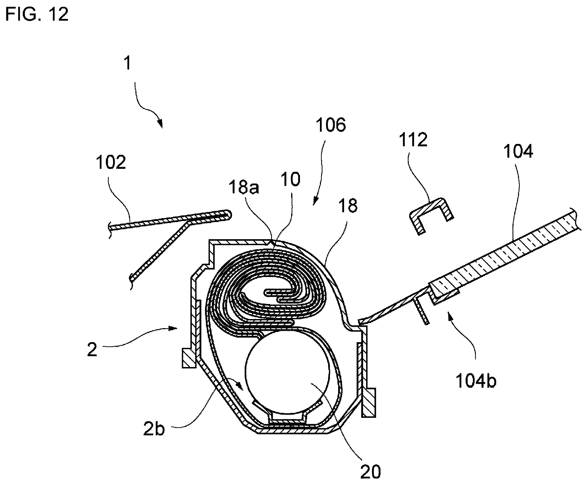

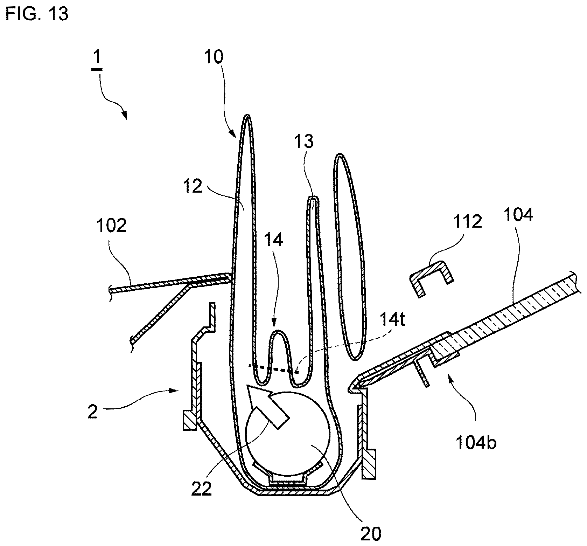

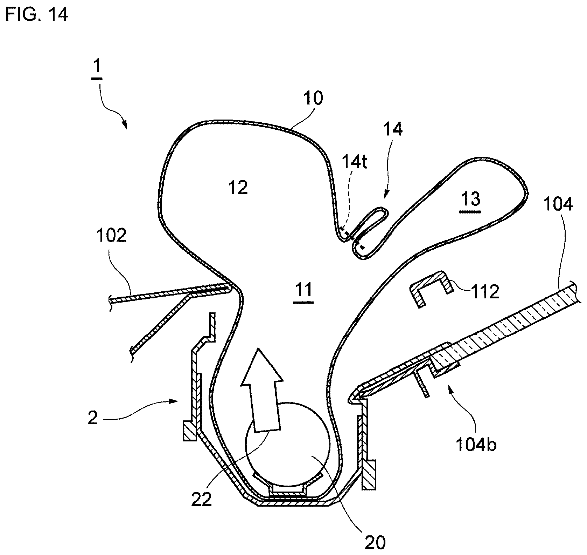

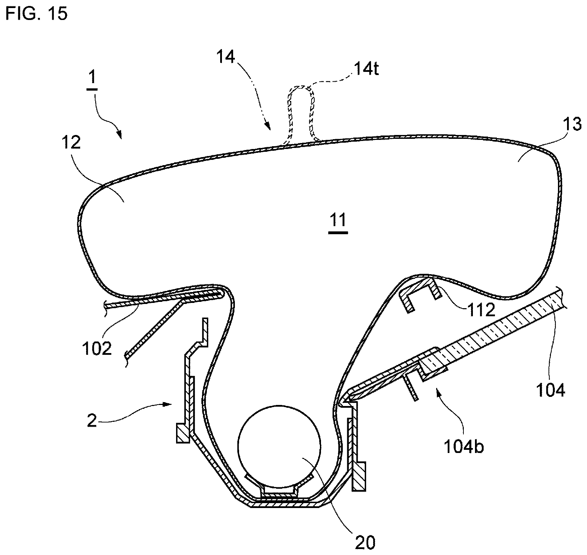

With the pedestrian protection airbag device 1 of the present Embodiment, a part of the airbag cushion 10 (preferably the portion between the front expansion part 12 and the rear expansion part 13) is folded outward and the folded portion is sewn together with sewing thread 14t (see FIG. 13, and the like). In this manner, the temporary stitched part 14 formed by sewing a portion of the airbag cushion 10 in a collected together shape also enables the front expansion part 12 to deploy earlier (see FIG. 12 to FIG. 15). The sewing thread 14t also does not need to remain unbroken until the end, and it does not matter if the thread breaks while the airbag cushion 10 is expanding and deploying (see FIG. 15).

### Embodiment 3

There are no particular limitations on the specific configuration of the temporary stitched part 14, so long as the configuration functions to regulate the flow of gas 22 at the initial stage of deployment and create a state in which the front expansion part 12 is more likely to expand and deploy first. Although not specifically depicted, the temporary stitched part 14 may be provided along the vehicle width direction, may be provided from a first end to a second end along the entire length of the airbag cushion 10, or may be provided along the entire length of the airbag cushion 10 in the vehicle width direction. In addition, the temporary stitched part 14 may be provided in portions excluding the lower parts of the A-pillars 108 on both sides of the vehicle 100 in the vehicle width direction.

With the pedestrian protection airbag device 1 as described above, the chamber 11 of the airbag cushion 10 is divided by a temporary stitched part 14 into a front expansion part (portion that will become a front expansion part) 12 and a rear expansion part (portion that will become a rear expansion part) 13, and the inflator 20 discharges gas 22 toward the front expansion part 12 so as to deploy the front expansion part 12 earlier than the rear expansion part 13, enabling deployment of the front expansion part 12 first. This is a structural mechanism that sequentially sequences the increase in internal pressure so that expansion and deployment is performed in two stages. By intentionally delaying the deployment of the rear expansion part 13, the internal pressure of the airbag cushion 10 can be prevented from becoming too high in the narrow area directly above the windshield 104. This prevents the airbag cushion 10 from strongly interfering with peripheral components such as the windshield 104 and the wipers 112,and preventing the windshield 104 from being damaged. In addition, by inflating the front expansion part 12 earlier than the rear expansion part 13, deployment can be completed in time for the head of the pedestrian to collide even in cases where the impact point is further forward of the vehicle 100 (see FIG. 16, and the like). In addition, by expanding and deploying the front expansion part 12 early in this manner, even if there are differences in quality, differences in deployment speed, and variations in behavior between individual products, such differences and variations can be mitigated and suppressed. Furthermore, with the pedestrian protection airbag device 1 as described above, by regulating the internal structure of the airbag cushion 10 around the inflator 20, abnormal deployment, such as the airbag cushion 10 getting caught on the inflator 20 during deployment, can be suppressed.

Note that the embodiment described above is an example of a preferred implementation of the present invention but is not limited thereto, and various modified implementations are possible within a range that does not depart from a gist of the present invention. For example, in the above embodiment, the temporary stitched part 14 has been described, but this is merely one preferred example of a temporary fastening part for regulating the flow of gas 22 in the initial stage of deployment so that the front expansion part 12 expands and deploys first, rather than the airbag cushion 10 expanding and deploying uniformly as in the past, thereby enabling a state in which the front expansion part 12 is more likely to expand and deploy first. As long as the same function is achieved, configurations other than stitching can be adopted, such as temporarily fixing a portion of the airbag cushion 10 using an adhesive with a relatively weak adhesive strength, or regulating the flow of gas 22 using a temporarily placed flow-regulating fabric.

In addition, in the embodiment described above, the pedestrian protection airbag device 1 having one inflator 20 has been described as an example, but it goes without saying that similar operations and functions can be achieved even with a pedestrian protection airbag device 1 including two or more inflators 20. In short, whether the inflator 2 is one or two or more, the operation and function of the pedestrian protection airbag device 1 as described above can be achieved.

### Additional Considerations for Various Embodiments

### Embodiment 1

A pedestrian protection airbag device including an airbag cushion that expands during a vehicle collision and deploys from a boundary part between a hood and a windshield of the vehicle to protect a pedestrian or the like who collides with the vehicle;
a temporary fastening part that temporarily fastens a part of the airbag cushion so as to divide a chamber that forms an internal space of the airbag cushion into a front expansion part that expands at an upper part of the hood in an initial stage of expansion and deployment of the airbag cushion and a rear expansion part that expands near a lower end part of the windshield; and
an inflator that discharges gas toward the front expansion part so as to expand the front expansion part earlier than the rear expansion part.

### Embodiment 2

The pedestrian protection airbag device according to Embodiment 1, wherein the temporary fastening part is formed using a temporary stitched part of sewing on a part of the airbag cushion.

### Embodiment 3

The pedestrian protection airbag device according to Embodiment 2, wherein the temporary stitched part is provided between the front expansion part and the rear expansion part.

### Embodiment 4

The pedestrian protection airbag device according to Embodiment 3, wherein the temporary stitched part is provided by folding a part of the airbag cushion inward and sewing the folded portion.

### Embodiment 5

The pedestrian protection airbag device according to Embodiment 3, wherein the temporary stitched part is provided by folding a part of the airbag cushion outward and sewing the folded portion.

### Embodiment 6

The pedestrian protection airbag device according to any one of Embodiments 2 to 5, wherein the temporary stitched part is provided using a sewing thread that may break during the course of the airbag cushion being expanded and deployed.

### Embodiment 7

The pedestrian protection airbag device according to any one of Embodiments 2 to 6, wherein the temporary stitched part is provided along a vehicle width direction.

### Embodiment 8

The pedestrian protection airbag device according to any one of Embodiments 2 to 7, wherein the temporary stitched part is provided over the entire length of the airbag cushion in the vehicle width direction.

### Embodiment 9

The pedestrian protection airbag device according to any one of Embodiments 2 to 8, wherein the temporary stitched part is provided in a vehicle width direction, except for on lower parts of the A-pillars on both sides.

### Embodiment 10

The pedestrian protection airbag device according to any one of Embodiments 1 to 9, wherein the inflator is installed so as to discharge gas toward a front of the vehicle.

### Embodiment 11

The pedestrian protection airbag device according to any one of Embodiments 1 to 9, wherein the inflator is installed so as to discharge gas in a direction in which the front expansion part deploys.

### Embodiment 12

The pedestrian protection airbag device according to any one of Embodiments 1 to 9, wherein the inflator is installed so as to discharge gas in an obliquely upward direction of the vehicle.

### Embodiment 13

The pedestrian protection airbag device according to any one of Embodiments 1 to 12, wherein at least two inflators are installed.

### INDUSTRIAL APPLICABILITY

The present invention relates to a pedestrian protection airbag device that is suitably used to protect pedestrians and cyclists who collide with a vehicle.

### Description of Reference Numerals

1. Pedestrian protection airbag device
2. Housing
2b. Bottom wall part
10. Airbag cushion
11. Chamber
12. Front expansion part
13. Rear expansion part
14. Temporary stitched part (temporary fastening part)
14t. Sewing thread
15. Opening part
18. Cover
18a. Breakable part
20. Inflator
20s. Stud bolt
22. Gas
100. Vehicle
102. Vehicle hood
104. Vehicle windshield
104b. Lower end part of windshield
106. Boundary part between hood and windshield
108 A-pillar
110. Vehicle cabin
112. Wipers
200. Pedestrian

## Claims

1. A pedestrian protection airbag device comprising:
an airbag cushion that expands during a vehicle collision and deploys from a boundary part between a hood and a windshield of the vehicle to protect a pedestrian or the like who collides with the vehicle;
a temporary fastening part that temporarily fastens a part of the airbag cushion so as to divide a chamber that forms an internal space of the airbag cushion into a front expansion part that expands at an upper part of the hood in an initial stage of expansion and deployment of the airbag cushion and a rear expansion part that expands near a lower end part of the windshield; and
an inflator that discharges gas toward the front expansion part so as to expand the front expansion part earlier than the rear expansion part.

2. The pedestrian protection airbag device according to claim 1, wherein the temporary fastening part is formed using a temporary stitched part of sewing on a part of the airbag cushion.

3. The pedestrian protection airbag device according to claim 2, wherein the temporary stitched part is provided between the front expansion part and the rear expansion part.

4. The pedestrian protection airbag device according to claim 3, wherein the temporary stitched part is provided by folding a part of the airbag cushion inward and sewing the folded portion.

5. The pedestrian protection airbag device according to claim 3, wherein the temporary stitched part is provided by folding a part of the airbag cushion outward and sewing the folded portion.

6. The pedestrian protection airbag device according to claim 4 or 5, wherein the temporary stitched part is provided using a sewing thread that may break during the course of the airbag cushion being expanded and deployed.

7. The pedestrian protection airbag device according to claim 3, wherein the temporary stitched part is provided along a vehicle width direction.

8. The pedestrian protection airbag device according to claim 3, wherein the temporary stitched part is provided over the entire length of the airbag cushion in the vehicle width direction.

9. The pedestrian protection airbag device according to claim 3, wherein the temporary stitched part is provided in a vehicle width direction, except for on lower portions of the A-pillars on both sides.

10. The pedestrian protection airbag device according to any one of claims 1 to 9, wherein the inflator is installed so as to discharge gas toward a front of the vehicle.

11. The pedestrian protection airbag device according to any one of claims 1 to 9, wherein the inflator is installed so as to discharge gas in a direction in which the front expansion part deploys.

12. The pedestrian protection airbag device according to claim 10 or 11, wherein the inflator is installed so as to discharge gas in an obliquely upward direction of the vehicle.

13. The pedestrian protection airbag device according to any one of claims 1 to 9, wherein at least two inflators are installed.
